# EUROPÄISCHE PATENTSCHRIFT

(11) **EP 1 510 846 B1**
(45) Veröffentlichungstag und Bekanntmachung des Hinweises auf die Patenterteilung: **26.07.2006**
(21) Anmeldenummer: 04015366.0
(22) Anmeldetag: 30.06.2004
(51) Int. Cl.: G02B 7/10

(54) **Führungssystem für optische Systeme, insbesondere Zoom-Systeme**
Guiding System for Optical Systems, in particular Zoom Systems
Système de guidage pour un système optique, en particulier un système zoom

(30) Priorität: 26.08.2003 DE 10339255
(43) Veröffentlichungstag der Anmeldung: 02.03.2005
(73) Patentinhaber: Leica Microsystems (Schweiz) AG, 9435 Heerbrugg (CH)
(72) Erfinder: Soppelsa, Peter, 9445 Rebstein (CH)
(74) Vertreter: Hössle Kudlek & Partner

(56) Entgegenhaltungen:
- GB-A- 1 058 001
- US-A- 3 748 024

## Beschreibung

Die Erfindung betrifft ein Führungssystem für optische Systeme, insbesondere Zoom-Systeme, bei denen optische Baugruppen, wie Linsen oder Linsengruppen relativ zueinander verschoben werden. Bei einem Zoom-System werden beispielsweise die einzelnen Zoomglieder, die aus Einzellinsen oder Linsengruppen bestehen, längs der optischen Achse des Zoom-Systems relativ zueinander verschoben. Hierfür ist ein Führungssystem notwendig, das Bestandteil des optischen Instruments ist. Das optische Instrument kann ein Zoom sein, der in einer Kamera oder in einem Mikroskop eingebaut ist.

Verschiedene Konstruktionen derartiger Führungssysteme sind, wie im folgenden geschildert, bekannt.

Koaxial um die optische Achse angeordnete, ineinander und im Gehäuse verschiebbare Hülsen, in denen jeweils ein Zoomglied angeordnet ist, können das Führungssystem eines Zooms bilden. Hierbei besteht in der Regel ein erhebliches Lateral-Spiel zwischen den Zoomgliedern und dem Gehäuse hervorgerufen durch die Summe der Durchmessertoleranzen. Weiterhin besteht bei Hülsen geringer axialer Länge die Gefahr der Verkippung der einzelnen Zoomglieder, insbesondere wenn die Hülsen ineinander verschoben werden. Andererseits bewirkt ein geringes Durchmesserspiel eine Schwergängigkeit der Bewegung der Zoomglieder im Gehäuse. Nach Einbau der Hülsen mit den Zoomgliedern im Gehäuse sind die Linsen nicht mehr zugänglich, so dass weder eine Reinigung der Linsen noch eine laterale oder axiale Justierung der Zoomglieder möglich ist.

Ein weiteres, bekanntes Zoom-Führungssystem besteht aus parallel zur optischen Achse angeordneten Führungssäulen, auf denen sich Schieber bewegen, die die Zoomglieder aufnehmen. Dabei dient eine Säule als Führungssäule, eine andere als Verdrehsicherung gegen eine Verdrehung des Zoomglieds um die optische Achse. Bei dieser Lösung müssen enge Durchmessertoleranzen der Säulen und Schieber eingehalten werden, um Spiel zu vermeiden. Eine mögliche Durchbiegung der Säulen führt zu Führungsfehlern. Weiterhin müssen enge Positionstoleranzen der Säulen eingehalten werden. Die Schieber, die die Zoomglieder aufnehmen, weisen bei dieser Lösung eine komplexe Geometrie auf. Als Folge der sich aus dem komplexen Aufbau ergebenden Toleranzsummen für die Position der Achse der Zoomglieder (optische Achse), müssen die Zoomglieder lateral justierbar sein.

Schließlich ist ein koaxial aufgebautes Führungssystem mit scheibenförmigen Schiebern bekannt, die Zoom-Linsen aufnehmen, und die sich für die laterale Positionierung im Durchmesser der Gehäuseinnenwand abstützen. Die eigentliche Führung dieser Schieber und die Vorsorge gegen eine Verkippung erfolgen mittels im Dreitakt im Schieber angeordneter Bolzen, die das Gehäuse in Längsschlitzen durchdringen und an einer um das Gehäuse angeordneten Dreitakt-Mantelkurve anliegen. Auch diese Lösung kann eine mögliche Verkippung der Zoomglieder als Folge unvermeidlicher Toleranzen des Dreitakt trotz einer teueren Mantelkurve nicht verhindern. Als Folge der für die Leichtgängigkeit der Bewegung erforderlichen Durchmessertoleranzen besteht die Gefahr eines lateralen Versatzes der Zoomglieder, dem nur mit aufwendigen Maßnahmen begegnet werden kann. Weiterhin bestehen die bekannten Nachteile aufgrund der Unzugänglichkeit der Linsen, nämlich eine nicht mögliche axiale oder laterale Justierung der Zoomglieder sowie die nicht mögliche Reinigung der Linsen nach der Montage.

Aus der US 5,675,442 ist ein Führungssystem für Mikroskoplinsen bekannt, bei dem zwei Führungsstäbe einen oder mehrere Linsenhalter entlang einer optischen Achse führen. Ein Schieber eines Linsenhalters umgibt hierbei formschlüssig einen der beiden Führungsstäbe, der somit als Führungssäule dient. Der andere Führungsstab dient als Verdrehsicherung, wobei der Linsenhalter den Führungsstab zum Teil umgibt. Hierzu weist der Linsenhalter an der betreffenden Seite eine U-förmige Aussparung auf, in die der Führungsstab eingreift. Um eine mögliche Verschiebung innerhalb dieser Ausnehmung zu vermeiden, ist auf einer Seite der Ausnehmung ein Magnet angebracht, der eine magnetische Anziehungskraft auf den betreffenden magnetisierbaren Führungsstab ausübt, so dass letzterer immer an derjenigen Seite der U-förmigen Ausnehmung anliegt, an der sich der Magnet befindet.

Die mit dieser Lösung verbundenen Nachteile wurden bereits weiter oben in Zusammenhang mit der geschilderten zweiten Lösungsform beschrieben.

Die wesentlichen Anforderungen an die geschilderten Führungssysteme lassen sich wie folgt zusammenfassen:
- Spielfreiheit der Bewegung ohne Verkippung und/oder Versatz der Zoomglieder zur optischen Achse des Zooms,
- Leichtgängigkeit der Bewegung für benutzerfreundliche (hand- oder motorbetriebene) Bedienung,
- Zugänglichkeit der Zoomglieder zwecks Justierung und Reinigung und
- platzsparende und kostengünstige Ausführung.

Obige Ausführungen gelten selbstverständlich auch für Führungssysteme für andere optische Systeme, bei denen optische Baugruppen wie Linsen oder Linsengruppen in einer Richtung und/oder relativ zueinander verschoben werden müssen.

Eine Aufgabe der Erfindung ist es, die oben genannten Nachteile bei bekannten Führungssystemen zu vermeiden. Weiterhin sollen die oben aufgeführten wesentlichen Anforderungen soweit als möglich in dem erfindungsgemäß vorgeschlagenen Führungssystem erfüllt sein.

Es wird ein erfindungsgemäßes Führungssystem für optische Systeme, insbesondere Zoom-Systeme, vorgeschlagen, mit dem optische Baugruppen, wie Linsen und/oder Linsengruppen entlang einer optischen Achse zu verschieben sind, wobei das Führungssystem folgende Komponenten umfasst: Ein Gehäuse, das sich entlang der optischen Achse erstreckt und einen Innendurchmesser definiert; mindestens einen Schieber zur Aufnahme einer optischen Baugruppe, wobei dieser Schieber ein Hülsensegment aufweist, das an seiner Außenseite mehrere Auflageflächen zur Auflage am Innendurchmesser besitzt; mindestens eine Antriebseinheit zur definierten Bewegung eines Schiebers entlang der optischen Achse; eine Einrichtung zum Halten des Hülsensegments des Schiebers am Innendurchmesser sowie eine Einrichtung zur Sicherung eines Schiebers gegen Verdrehung in der Ebene senkrecht zum Innendurchmesser.

Die Vorteile des erfindungsgemäßen Führungssystems sollen im folgenden anhand eines Zoom-Systems erläutert werden, das einzelne Zoomglieder aufweist, die zur Erzeugung einer variablen Vergrößerung entlang der optischen Achse in definierter Weise relativ zu einander zu schieben sind. Die Erfindung ist jedoch in keiner Weise auf derartige Zoom-Systeme beschränkt, sondern hat für andere optische Systeme mit entsprechenden optischen Baugruppen dieselbe Bedeutung.

Die Längsführung erfolgt beim erfindungsgemäßen Führungssystem durch den präzisen Innendurchmesser, der durch das Gehäuse definiert wird. In dem Gehäuse sind Schieber mit den Zoomlinsen angeordnet. Diese Schieber sind jedoch keine ganzen Hülsen, sondern weisen Hülsensegmente auf, die mit mehreren Auflageflächen am Innendurchmesser des Gehäuses aufliegen. Eine Einrichtung hält das Hülsensegment eines Schiebers am Innendurchmesser, eine weitere Einrichtung bildet eine Verdrehsicherung gegen Verdrehungen in der Ebene senkrecht zum Innendurchmesser. Die am Hülsensegment ausgebildeten Auflageflächen führen den Schieber entlang der optischen Achse und liegen auf der Gehäuseinnenseite auf. Hierdurch ist eine Bewegung mit geringer Reibung möglich. Ein weiterer Vorteil dieser Auflageflächen besteht darin, dass nicht der gesamte Schieber oder das gesamte Hülsensegment paßgenau zum Innendurchmesser des Gehäuses ausgestaltet werden muss, sondern nur die erhabenen Auflageflächen am Hülsensegment. Je nach Geometrie des Gehäuses bestimmt sich die geeignete Geometrie der Auflageflächen, die bei einer Punktberührung der Gehäuseinnenseite auch als Auflagepunkte ausgeführt sein können.

Die Hülsensegmente sind lang genug, um eine Verkippungsgefahr der Zoomglieder zu beseitigen. Da es sich weiterhin um Hülsensegmente handelt, können zwei oder mehr Schieber in große Nähe zu einander gebracht werden, wenn beispielsweise das eine Hülsensegment in den Freiraum des Hülsensegments eines anderen Schiebers tritt. Dadurch dass die Hülse nicht ganz geschlossen ist, ist auch eine Zugänglichkeit der Zoom-Linsen zu Reinigungs- und Justierzwecken garantiert. Zu diesen Zwecken muss auch die Geometrie des Gehäuses einen Zugang ins Innere gewährleisten. Das Gehäuse beim erfindungsgemäßen Führungssystem muss lediglich einen präzisen Innendurchmesser definieren, um die exakte Längsführung der Schieber zu garantieren. Hierzu kann das Gehäuse eine zylindrische Form aufweisen, wobei der Innendurchmesser mit dem inneren Zylinderdurchmesser zusammenfällt, oder aber in axialer Richtung sich erstreckende Schienen aufweisen, die um einen Innendurchmesser herum angeordnet sind, oder aber auch zwei einander gegenüber angeordnete V-förmige Flächen aufweisen, die einen Innendurchmesser umgeben. In den letzten beiden Fällen liegen die Hülsensegmente mit ihren Auflageflächen punktförmig auf den Schienen bzw. V-förmigen Flächen auf.

Um einen Zugang zu den Zoomgliedern zu ermöglichen, weist das Gehäuse vorteilhaft zumindest eine segmentartige Öffnung auf.

Die Erfindung ermöglicht die Ausgestaltung eines Führungssystems für optische Systeme mit einer leichtgängigen Bewegung der optischen Baugruppen und somit einer benutzerfreundlichen Bedienung, mit einer Zugänglichkeit der optischen Baugruppen zwecks Justierung und Reinigung sowie mit einer Spielfreiheit der Bewegung ohne Verkippung und/oder Versatz der einzelnen optischen Baugruppen zur optischen Achse.

Es ist insbesondere vorteilhaft, wenn das Hülsensegment eines Schiebers vier Auflageflächen aufweist. Die Auflageflächen befinden sich dabei geeigneterweise an den vier Ecken des Hülsensegments. Damit ist eine optimale Auflage am Innendurchmesser bei gleichzeitigem optimalen Schutz gegen Verkippung gegeben.

Weiterhin ist vorteilhaft, wenn das Hülsensegment eine Kreisbogen von 180° oder weniger, vorzugsweise von 120° oder von 90°, beschreibt. Dies erlaubt eine große Führungslänge in Achsrichtung - anders als bei geschlossenen Hülsen. Ein Ineinanderschieben von mehreren Hülsen und damit eine starke Annäherung der jeweiligen von den Schiebern getragenen optischen Baugruppen ist durch die Ausbildung der Hülsensegmente möglich. Die Größe des Kreisbogens des Hülsensegments kann dabei an der Anzahl der ineinander zu schiebenden Hülsen bemessen werden. Beispielsweise ist es vorteilhaft, bei zwei relativ zu einander zu verschiebenden Hülsensegmenten diese jeweils als 120°-Segmente auszubilden und sie so anzuordnen, dass sie jeweils an einem in 180° gegenüberliegenden Sektoren des Gehäuseinnendurchmessers aufliegen.

Es ist vorteilhaft, das Hülsensegments eines Schiebers mittels magnetischer Kräfte am Innendurchmesser zu halten. Hierzu weist die entsprechende Einrichtung einen Magneten auf, der außerhalb des Innendurchmessers angebracht ist, wobei das Hülsensegment und/oder die Auflageflächen aus magnetisierbarem Material hergestellt sein kann. Der außerhalb des Innendurchmessers angeordnete Magnet zieht folglich das Hülsensegment an den Innendurchmesser bzw. an die am Innendurchmesser liegenden Auflagepunkte des Gehäuses. Hierzu ist es ausreichend, wenn die Auflageflächen aus magnetisierbarem Material hergestellt sind.

Alternativ ist es zweckmäßig, wenn die Einrichtung zum Halten eines Hülsensegments eines Schiebers am Innendurchmesser eine Achse aufweist, die auf der einen Seite mit dem Schieber und/oder dessen Hülsensegment verbunden ist und auf ihrer anderen Seite einen Magneten aufnimmt. Der Magnet wird dann zusammen mit dem Schieber in axialer Richtung verschoben, wobei Magnet und Schieber über die gemeinsame Achse miteinander fest verbunden sind. Durch die Magnetkraft wird das Hülsensegment an den Innendurchmesser gezogen, was eine Verkippung des Hülsensegments verhindert. Die Magnetkraft wirkt hierbei zwischen Magnet und einem magnetisierbaren Material, das radial weiter außerhalb angeordnet ist, beispielsweise ein Stahlstreifen, der in axialer Richtung verläuft und nahe des Magneten angeordnet ist. In diesem Ausführungsbeispiel besitzt jeder Schieber eine zugehörige Einrichtung zum Halten des Hülsensegments am Innendurchmesser.

In diesem Zusammenhang ist es vorteilhaft, wenn das Gehäuse einen Längsschlitz aufweist, um eine axiale Bewegung des Schiebers zusammen mit einer Einrichtung zum Halten des Hülsensegments des Schiebers zu ermöglichen. Bei der oben beschriebenen Ausführungsform greift dann die Achse durch den Längsschlitz beispielsweise in das Hülsensegment des Schiebers, während außerhalb des Längsschlitzes sich der an der Achse befestigte Magnet befindet. Ein Spiel der Achse im Längsschlitz, das zu einer Verkippung führen könnte, wird durch die Magnetkraft aufgehoben.

Weiterhin ist vorteilhaft, wenn der Längsschlitz des Gehäuses mittels eines Stahlstreifens, an den der an der erwähnten Achse befestigte Magnet angezogen wird, nach außen hin geschlossen ist. In diesem Fall fährt bei einer axialen Bewegung des Schiebers der Magnet in geringem Abstand entlang des Stahlstreifens. Dabei erzeugt das Schweben des Magnets über dem Stahlstreifen keine Reibung.

Weiterhin ist es wichtig, den Schieber gegen Drehungen in der Ebene senkrecht zum Innendurchmesser zu sichern. Solche Verdrehungen können dazu führen, dass die Antriebseinheit den Schieber nicht mehr definiert abgreifen kann. Derartige Fehler verhindern eine präzise Führung der optischen Baugruppen entlang der optischen Achse. Da ein platzsparender Aufbau notwendig ist, sind die Antriebseinheiten für einen oder die Schieber in der Regel seitlich der Schieber angebracht, um Raum in axialer Länge zu sparen. Über eine Kopplung greift die Antriebseinheit an einer Schieberseite an, wodurch es zu Verdrehungen kommen kann.

Eine vorteilhafte Einrichtung zur Sicherung gegen Verdrehungen eines Schiebers weist eine Achse auf, die auf ihrer einen Seite mit dem Schieber verbunden ist und an ihrer anderen Seite ein Kugellager aufnimmt, das außerhalb des Innendurchmessers angeordnet ist. Hierzu weist wiederum das Gehäuse einen Längsschlitz auf, um eine axiale Bewegung eines Schiebers zusammen mit besagter Einrichtung zur Verdrehsicherung zu ermöglichen.

Kugellager und Längsschlitz bilden dann eine ideale Verdrehsicherung.

Es ist in diesem Zusammenhang vorteilhaft, die Einrichtung zum Halten des Hülsensegments am Innendurchmesser sowie die Einrichtung zur Verdrehsicherung miteinander zu kombinieren. Bei den oben beschriebenen Einrichtungen ist dies dadurch möglich, dass beide Einrichtungen eine gemeinsame Achse aufweisen, die sich bei axialer Bewegung eines Schiebers entlang eines gemeinsamen Längsschlitzes bewegt. Die Achse, die an ihrer einen Seite mit dem Schieber bzw. dem entsprechenden Hülsensegment verbunden ist, nimmt auf ihrer anderen Seite zunächst ein Kugellager auf, das sich im Längsschlitz des Gehäuses bewegt, sowie beispielsweise an dem weiter entfernten Achsenende einen Magneten. In geringem Abstand zu diesen Magneten kann wie oben beschrieben ein Stahlstreifen angeordnet sein, der den Längsschlitz nach außen hin bedeckt.

Beim erfindungsgemäßen Führungssystem kann als Antriebseinheit eine Spindelkurve verwendet werden, die über eine Kopplung am Schieber diesen antreibt. Um ein möglichst klein bauendes Führungssystem zu realisieren, ist die Spindelkurve in einer Projektion auf den Querschnitt des Gehäuses betrachtet lateral von einem Schieber peripher zwischen Gehäuseinnen- und -außendurchmesser angeordnet.

Die unterschiedlichen vorteilhaften Geometrien des Gehäuses des Führungssystems sind bereits weiter oben behandelt worden. Mittels einer segmentartigen Öffnung im Gehäuse kann ein Zugang zu den optischen Baugruppen (Zoom-Linsen) zu Justier- und Reinigungszwecken geschaffen werden. Die segmentartige Öffnung ist hierbei je nach Geometrie des Gehäuses bereits vorhanden oder muss in das Gehäuse eingearbeitet werden.

Im folgenden soll anhand der beigefügten Zeichnung ein Ausführungsbeispiel die Erfindung und deren Vorteile näher erläutern.

Es zeigt
- Figur 1: zwei perspektivische schematische Ansichten eines Schiebers mit Hülsensegment für ein erfindungsgemäßes Führungssystem,
- Figur 2: eine Ausführungsform eines Gehäuses für ein erfindungsgemäßes Führungssystem in perspektivischer schematischer Darstellung,
- Figur 3: einen Schnitt entlang der Längsachse eines erfindungsgemäßen Führungssystems und
- Figur 4: einen Querschnitt des Führungssystems gemäß Figur 3.

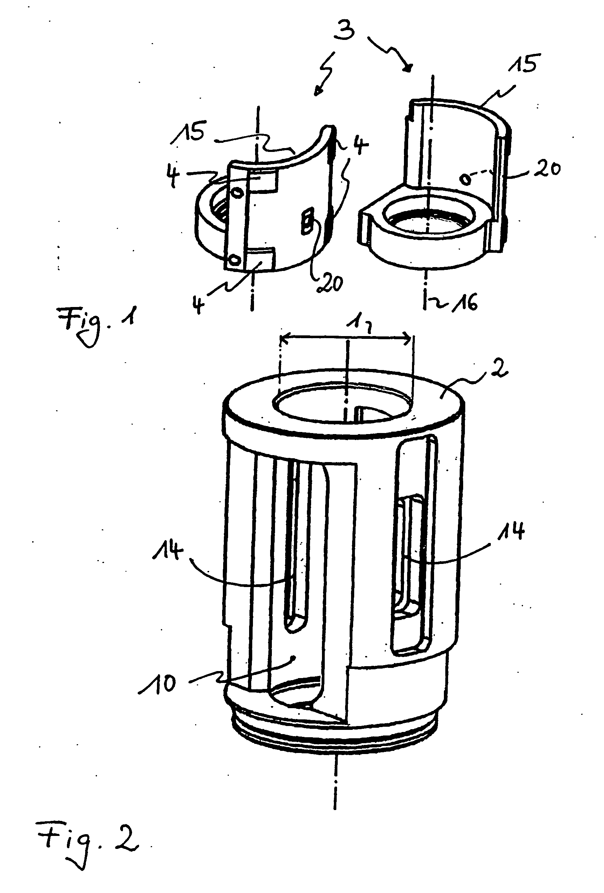

Als Beispiel soll im folgenden ein Führungssystem für ein Zoom-System gemäß vorliegender Erfindung näher betrachtet werden. Ein solches Führungssystem weist Schieber 3 auf, die jeweils eine Zoom-Linse oder Zoom-Linsengruppe aufnehmen. Figur 1 zeigt schematisch einen solchen Schieber 3 aus zwei verschiedenen perspektivischen Ansichten. Der ringförmige Teil des Schiebers 3 dient der Aufnahme einer Zoom-Linse/Linsengruppe und der Schieber 3 weist weiterhin ein Hülsensegment 15 auf, das in diesem Ausgangsbeispiel einen Kreisbogen von 120° beschreibt. Weiterhin sind in Figur 1 vier erhabene Auflageflächen 4 zu erkennen, die in der Nähe der Ecken des Hülsensegments angeordnet sind. Im Hülsensegment 15 befindet sich eine Bohrung 20 für eine Achse, die die weiter unten erläuterten Einrichtungen zum Halten des Hülsensegments am Innendurchmessers des Gehäuses sowie zur Sicherung eines Schiebers gegen Verdrehungen trägt.

Figur 2 zeigt schematisch ein Gehäuse 2 für ein erfindungsgemäßes Führungssystem in perspektivischer Ansicht. Das in diesem Fall zylindrische Gehäuse definiert einen präzisen Innendurchmesser 1. In den Zylindermantel des Gehäuses 2 sind Längsschlitze 14 angebracht, entlang derer die Schieber 3 in axialer Richtung im Inneren des Gehäuses 2 geführt werden. Mit 10 ist eine segmentartige Öffnung im Gehäuse 2 bezeichnet, die einen Zugang zu den optischen Baugruppen zu Justier- und Reinigungszwecken erlaubt. Mit dem in Figur 2 dargestellten Gehäuse 2 ist eine präzise Längsführung aufgrund des äußerst präzise herstellbaren Innendurchmessers 1 möglich.

Wie bereits oben erwähnt sind jedoch auch andere Geometrien von Gehäusen 2 vorstellbar, die einen präzisen Innendurchmesser 1 definieren können.

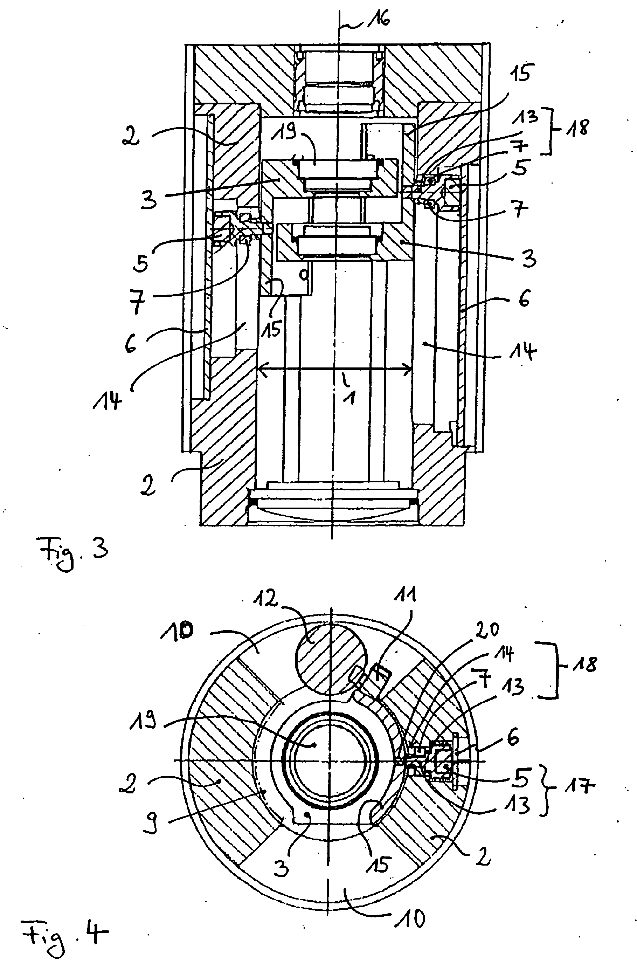

Figur 3 zeigt nun einen Querschnitt durch ein erfindungsgemäßes Führungssystem in axialer Richtung.

Dargestellt ist das Gehäuse 2, das einen Innendurchmesser 1 definiert. Das Gehäuse besitzt Längsschlitze 14, an denen entlang jeweils ein Schieber 3 mit Hülsensegment 15 geführt wird. Ein Schieber 3 trägt ein Zoomglied 19, bestehend aus einer Zoom-Linse oder einen Zoom-Linsengruppe. Der Schieber 3 ist mit seinem Hülsensegment 15 derart am Innendurchmesser 1 des Gehäuses 2 angeordnet, dass die Zoom-Linsen exakt auf der optischen Achse verschoben werden. Diese optische Achse ist mit 16 gekennzeichnet.

In diesem Ausführungsbeispiel sind die Einrichtungen zum Halten des Hülsensegments 15 des Schiebers 3 am Innendurchmesser 1 des Gehäuses und zur Sicherung des Schiebers 3 gegen Verdrehungen miteinander kombiniert und bestehen aus einer gemeinsamen Achse 13, die über eine Bohrung 20 im Hülsensegment 15 in dieses eingreift und außerhalb des Innendurchmessers 1 einen Magneten 5 sowie ein Kugellager 7 trägt. Jeder Schieber 3 und damit jedes Zoomglied ist mit einer solchen Einrichtung ausgestattet. Bei einer Bewegung in axialer Richtung bewegt sich die Achse 13 in einem Längsschlitz 14 im Gehäuse 2. Der präzise Längsschlitz 14 bildet zusammen mit dem Kugellager 7 die Einrichtung 18 zur Verdrehsicherung. Der Magnet 5 und der dazu in kleinem Abstand angeordnete Stahlstreifen 6 bewirken, dass die erhabenen Auflageflächen 4 mit Magnetkraft an den Innendurchmesser 1 des Gehäuses 2 gezogen werden. Die erhabenen Auflageflächen 4 an den Hülsensegmenten 15 sind in Figur 1 dargestellt. Zusammen mit der Verdrehsicherung sind die Zoomgruppen in fünf Freiheitsgraden präzise positioniert und entlang des sechsten Freiheitsgrades (axiale Längsführung) absolut spielfrei verschiebbar. Dabei erzeugt das Schweben der Magnete 5 über den Stahlstreifen 6 keine Reibung.

Die 120°-Hülsensegmente 15 sind in diesem Ausführungsbeispiels so angeordnet, dass sie jeweils an einem in 180° gegenüberliegendem Sektor 9 (vgl. Figur 4) des Gehäuseinnendurchmessers 1 aufliegen. Somit ist eine große Führungslänge in Achsrichtung - anders als bei geschlossenen Hülsen - möglich, wodurch eine genaue Führung realisiert werden kann.

Figur 4 zeigt einen Querschnitt des in Figur 3 dargestellten Führungssystems senkrecht zur optischen Achse 16. Sichtbar ist ein Schieber 3 mit einer zentriert zur optischen Achse eingepassten Zoom-Linse 19 und mit dem Hülsensegment 15 (auf der rechten Seite in Figur 4). Das den Innendurchmesser 1 definierende Gehäuse ist mit 2 bezeichnet. In den nicht als Führung benutzten Sektoren des Innendurchmessers 1 des Gehäuses 2 sind Öffnungen 10 eingebracht, die den Zugang zu den Zoom-Linsen 19 zu Justier- und Reinigungszwecken erlauben sowie eine platzsparende Anordnung einer Antriebseinheit ermöglichen. Als Antriebseinheit wird eine Spindelkurve 12 verwendet, die über eine Kopplung 11 den Schieber 3 antreibt. Bei einer solchen Spindelkurve 12 wird die Drehbewegung der Spindel über ein steilgängiges Gewinde in eine geradlinige Bewegung, in diesem Fall in axialer Richtung, umgesetzt. Diese Antriebsform mit der lateralen Kupplung des Schiebers 3 verursacht das Auftreten von Kräften, die nicht nur in axialer Richtung wirken. Daher muss eine Verdrehsicherung vorgesehen sein, um eine präzise Bewegung in axialer Richtung zu garantieren.

Figur 4 zeigt das Kugellager 7, das von der Achse 13 aufgenommen ist und im präzisen Längsschlitz 14 eine verdrehsichere Bewegung des Schiebers 3 in axialer Richtung ermöglicht. Zur Verkippsicherung ist, wie bereits oben beschrieben, ein Magnet 5 vorgesehen, der von derselben Achse 3 aufgenommen wird, die in einer Bohrung 20 im Hülsensegment 15 befestigt ist. Die Magnetkraft erlaubt eine spielfreie Bewegung entlang des Innendurchmessers 1. In geringem Abstand vom Magnet 5 befindet sich der Stahlstreifen 6, der den Längsschlitz 14 nach außen hin schließt, und an dem entlang sich der Magnet 5 reibungsfrei bewegt.

Das erfindungsgemäße Führungssystem ermöglicht den Einsatz von Schiebern 3, die mit ihren Hülsensegmenten 15 eine ausreichende Führungslänge und Führungsbreite bieten, wie sie für ein stabiles System notwendig sind. Gleichzeitig erlauben die segmentartigen Öffnungen 10 im Gehäuse 2 einen Zugang zu den Schiebern 3, so dass Justierungen in Richtung der optischen Achse sowie in lateraler Richtung möglich sind. Zudem ist eine Reinigung der Linsen nach Montage möglich.

Das erfindungsgemäße Führungssystem erlaubt eine absolut spielfreie und reibungsarme Führung, es besitzt einen platzsparenden und kostengünstigen koaxialen Aufbau und gewährleistet die Zugänglichkeit der Linsen.

Die Auflageflächen 4 am Hülsensegment 15 (vgl. Figur 1) sind in kostengünstigen Drehoperationen präzise zu einander ausgerichtet herstellbar.

Die vier Auflageflächen 4 können nach Montage der Zoomgruppen so bearbeitet werden, dass sie einen Zylinder beschreiben, dessen Durchmesser exakt dem Innendurchmesser 1 des Gehäuses 2 entspricht und dessen Achse mit der optischen Achse des Zoomgliedes 19 zusammenfällt. Somit ist ein laterales Justieren der Zoomglieder nicht erforderlich. Die exakte Gleichheit der Durchmesser ist nur möglich, weil die Segmente 15 nur an den vier Auflageflächen 4 aufliegen. In dieser Ausgestaltung wird ferner von der gemeinsamen Führungsfläche für beide Segmente 15 Gebrauch gemacht. In einer anderen Ausgestaltung werden die Segmente so ausgestaltet, dass die vier Flächen 4 Teil eines Zylinders mit exakt dem Durchmessers des Innendurchmessers 1 sind. In diese Segmente werden die Zoomglieder so montiert, dass deren optische Achse mit der Zylinderachse übereinstimmt.

Weitere Varianten bezüglich des Gehäuses 2: Anstelle der Sektoren des Innendurchmessers 1 können je zwei V-förmige Flächen, die parallel zur optischen Achse 16 angeordnet sind, als Führungsflächen dienen. Hier ist jedoch die schwierigere Herstellbarkeit bei der benötigten Präzision zu beachten. Zudem sind die insgesamt vier Flächen nur schwierig parallel und positionsgenau so anzuordnen, dass sie eine gemeinsame optische Achse des Zooms definieren. Das gleiche gilt auch, wenn anstatt der vier Führungsflächen Führungssäulen angeordnet sind. Hingegen lassen sich als weitere Alternative vier Auflageschienen zur Präzision bei der Herstellung des Innendurchmessers 1 durch einfaches Präzisionsdrehen herstellen. Die Vorteile der einfachen Anfertigung der präzisen Schieber 3 mit ihren Hülsensegmenten 15 bleiben auch bei diesen Varianten erhalten.

Es sei hervorgehoben, dass die in diesem Ausführungsbeispiel behandelten Merkmale des erfindungsgemäßen Führungssystems nicht nur in den dargestellten Kombinationen realisiert werden können, sondern auch jeweils für sich genommen in anderen Anordnungsformen.

Die Erfindung eignet sich insbesondere für Zoom-Systeme, wie sie in Mikroskopen Einsatz finden. Sie sind selbstverständlich auch für Stereomikroskope mit parallel angeordneten Zoom-Systemen verwendbar.

### Bezugszeichenliste:

- 1: Innendurchmesser
- 2: Gehäuse
- 3: Schieber
- 4: Auflageflächen
- 5: Magnet
- 6: Stahlstreifen
- 7: Kugellager
- 8 9: Sektor des Innendurchmessers
- 10: Öffnung des Gehäuses
- 11: Kopplung
- 12: Antriebseinheit, Spindelkurve
- 13: Achse
- 14: Längsschlitz
- 15: Hülsensegment
- 16: optische Achse
- 17: Einrichtung zum Halten am Innendurchmesser
- 18: Einrichtung zur Verdrehsicherung
- 19: optische Baugruppe, Zoomlinse
- 20: Bohrung

## Patentansprüche

1. Führungssystem für optische Systeme, insbesondere Zoom-Systeme, mit dem optische Baugruppen, wie Linsen und/oder Linsengruppen, entlang einer optischen Achse (2) zu verschieben sind, umfassend
ein einen Innendurchmesser (1) definierendes Gehäuse (2), das sich entlang der optischen Achse (16) erstreckt,
mindestens ein Schieber (3) mit einem Hülsensegment (15), wobei der Schieber (3) zur Aufnahme einer optischen Baugruppe (19) ausgebildet ist, und das Hülsensegment (15) an seiner Außenseite mehrere Auflageflächen (4) zur Auflage am Innendurchmesser (1) aufweist,
mindestens eine Antriebseinheit (12) zur definierten Bewegung eines Schiebers (3) entlang der optischen Achse (16),
eine Einrichtung (17) zum Halten des Hülsensegments (15) eines Schiebers (3) am Innendurchmesser (1) sowie
eine Einrichtung (18) zur Sicherung eines Schiebers (3) gegen Verdrehung in der Ebene senkrecht zum Innendurchmesser (1).

2. Führungssystem nach Anspruch 1, **dadurch gekennzeichnet, dass** das Hülsensegment (15) vier Auflageflächen (4) aufweist.

3. Führungssystem nach Anspruch 1 oder 2, **dadurch gekennzeichnet, dass** das Hülsensegment (15) einen Kreisbogen von 180° oder weniger, vorzugsweise von 120° oder 90°, beschreibt.

4. Führungssystem nach einem der Ansprüche 1 bis 3, **dadurch gekennzeichnet, dass** die Hülsensegmente (15) in gegenüberliegenden Sektoren des Innendurchmessers (1) angeordnet sind.

5. Führungssystem nach einem der Ansprüche 1 bis 4, **dadurch gekennzeichnet, dass** die Einrichtung (17) zum Halten eines Hülsensegments (15) am Innendurchmesser (1) einen Magneten (5) aufweist, der außerhalb des Innendurchmessers (1) angebracht ist, wobei das Hülsensegment (15) und/oder die Auflageflächen (4) aus magnetisierbaren Material hergestellt sind.

6. Führungssystem nach einem der Ansprüche 1 bis 4, **dadurch gekennzeichnet, dass** die Einrichtung (17) zum Halten eines Hülsensegments (15) eines Schiebers (3) am Innendurchmesser (1) eine Achse (13) aufweist, die zum einen mit dem Schieber (3) verbunden ist und zum anderen einen Magneten (5) aufnimmt.

7. Führungssystem nach einem der Ansprüche 1 bis 6, **dadurch gekennzeichnet, dass** das Gehäuse (2) einen Längsschlitz (14) aufweist, um eine axiale Bewegung eines Schiebers (3) zusammen mit einer Einrichtung (17) zum Halten des Hülsensegments (15) dieses Schiebers (3) zu ermöglichen.

8. Führungssystem nach einem der Ansprüche 1 bis 7, **dadurch gekennzeichnet, dass** der Längsschlitz (14) des Gehäuses (2) mittels eines Stahlstreifens (6) nach außen hin geschlossen ist.

9. Führungssystem nach einem der Ansprüche 1 bis 8, **dadurch gekennzeichnet, dass** die Einrichtung (18) zur Sicherung eines Schiebers (3) gegen Verdrehung eine Achse (13) aufweist, die zum einen mit dem Schieber (3) verbunden ist und zum anderen ein Kugellager (7) aufnimmt, das außerhalb des Innendurchmessers (1) angebracht ist.

10. Führungssystem nach Anspruch 9, **dadurch gekennzeichnet, dass** das Gehäuse (2) einen Längsschlitz (14) aufweist, um eine axiale Bewegung eines Schiebers (3) zusammen mit einer Einrichtung (18) zur Sicherung des Schiebers (3) gegen Verdrehung zu ermöglichen.

11. Führungssystem nach einem der Ansprüche 1 bis 10, **dadurch gekennzeichnet, dass** die Einrichtung (17) zum Halten des Hülsensegments (15) eines Schiebers (3) am Innendurchmesser (1) und die Einrichtung (18) zur Sicherung eines Schiebers (3) gegen Verdrehung miteinander kombiniert sind.

12. Führungssystem nach einem der Ansprüche 1 bis 11, **dadurch gekennzeichnet, dass** als Antriebseinheit (12) eine Spindelkurve (12) verwendet wird, die über eine Kopplung (11) am Schieber (3) diesen antreibt.

13. Führungssystem nach Anspruch 12, **dadurch gekennzeichnet, dass** die Spindelkurve (12) in einer Projektion auf den Querschnitt des Gehäuses (2) lateral von einem Schieber (3) angeordnet ist.

14. Führungssystem nach einem der Ansprüche 1 bis 13, **dadurch gekennzeichnet, dass** das Gehäuse (2) eine zylindrische Form aufweist.

15. Führungssystem nach einem der Ansprüche 1 bis 13, **dadurch gekennzeichnet, dass** das Gehäuse (2) in axialer Richtung erstreckende Schienen aufweist, die um den Innendurchmesser (1) herum angeordnet sind.

16. Führungssystem nach einem der Ansprüche 1 bis 14, **dadurch gekennzeichnet, dass** das Gehäuse (2) zwei einander gegenüber angeordnete V-förmige Flächen aufweist, die den Innendurchmesser (1) umgeben.

17. Führungssystem nach einem der Ansprüche 1 bis 16, **dadurch gekennzeichnet, dass** das Gehäuse (2) zumindest eine segmentartige Öffnung (10) aufweist.

18. Optisches Instrument, insbesondere Zoom-System, mit einem Führungssystem gemäß einem der Ansprüche 1 bis 17.

## Claims

1. Guide system for optical systems, particularly zoom systems, with which optical assemblies such as lenses and/or sets of lenses can be moved along an optical axis (2), comprising
a housing (2) defining an internal diameter (1), extending along the optical axis (16),
at least one slide (3) with a sleeve segment (15), the slide (3) being designed to accommodate an optical assembly (19), and the sleeve segment (15) comprising on the outside a plurality of contact surfaces (4) for abutment on the internal diameter (1),
at least one drive unit (12) for defined movement of a slide (3) along the optical axis (16),
a device (17) for holding the sleeve segment (15) of a slide (3) at the internal diameter (1) and
a device (18) for securing a slide (3) against rotation in the plane perpendicular to the internal diameter (1).

2. Guide system according to claim 1, **characterised in that** the sleeve segment (15) comprises four contact surfaces (4).

3. Guide system according to claim 1 or 2, **characterised in that** the sleeve segment (15) describes an arc of 180° or less, preferably 120° or 90°.

4. Guide system according to any one of claims 1 to 3, **characterised in that** the sleeve segments (15) are arranged in opposite sectors of the internal diameter (1).

5. Guide system according to any one of claims 1 to 4, **characterised in that** the device (17) for holding a sleeve segment (15) at the internal diameter (1) comprises a magnet (5) which is mounted outside the internal diameter (1), the sleeve segment (15) and/or the contact surfaces (4) being made of magnetisable material.

6. Guide system according to any one of claims 1 to 4, **characterised in that** the device (17) for holding a sleeve segment (15) of a slide (3) at the internal diameter (1) comprises a spindle (13) which is connected on the one hand to the slide (3) and on the other hand accommodates a magnet (5).

7. Guide system according to any one of claims 1 to 6, **characterised in that** the housing (2) has a longitudinal slot (14) to allow axial movement of a slide (3) together with a device (17) for holding the sleeve segment (15) of this slide (3).

8. Guide system according to any one of claims 1 to 7, **characterised in that** the longitudinal slot (14) of the housing (2) is closed off to the outside by a steel strip (6).

9. Guide system according to any one of claims 1 to 8, **characterised in that** the device (18) for securing a slide (3) against rotation comprises a spindle (13) which on the one hand is connected to the slide (3) and on the other hand accommodates a ball bearing (7) mounted outside the internal diameter (1).

10. Guide system according to claim 9, **characterised in that** the housing (2) has a longitudinal slot (14) to allow axial movement of a slide (3) together with a device (18) for securing the slide (3) against rotation.

11. Guide system according to any one of claims 1 to 10, **characterised in that** the device (17) for holding the sleeve segment (15) of a slide (3) at the internal diameter (1) and the device (18) for securing a slide (3) against rotation are combined with one another.

12. Guide system according to any one of claims 1 to 11, **characterised in that** a spindle cam (12) is used as the drive unit (12), driving the slide (3) by means of a coupling (11) thereon.

13. Guide system according to claim 12, **characterised in that** the spindle cam (12) seen in a projection on the cross-section of the housing (2), is arranged laterally of a slide (3).

14. Guide system according to any one of claims 1 to 13, **characterised in that** the housing (2) is cylindrical.

15. Guide system according to any one of claims 1 to 13, **characterised in that** the housing (2) comprises rails extending in the axial direction and arranged around the internal diameter (1).

16. Guide system according to any one of claims 1 to 14, **characterised in that** the housing (2) has two opposing V-shaped surfaces which surround the internal diameter (1).

17. Guide system according to any one of claims 1 to 16, **characterised in that** the housing (2) comprises at least one segment shaped opening (10).

18. Optical instrument, particularly a zoom system, having a guide system according to any one of claims 1 to 17.

## Revendications

1. Système de guidage pour des systèmes optiques, en particulier des systèmes de zoom, par lequel peuvent être déplacés en translation des sous-ensembles optiques, tels que des lentilles et/ou des groupes de lentilles, le long d'un axe optique (2), comportant
- un boîtier (2) définissant un diamètre intérieur (1) et s'étendant le long de l'axe optique (16),
- au moins un tiroir (3) comportant un segment de manchon (15), le tiroir (3) étant réalisé pour recevoir un sous-ensemble optique (19), et le segment de manchon (15) présentant sur son côté extérieur plusieurs surfaces d'appui (4) pour l'appui contre le diamètre intérieur (1),
- au moins une unité d'entraînement (12) pour le déplacement défini d'un tiroir (3) le long de l'axe optique (16),
- un dispositif (17) pour maintenir le segment de manchon (15) d'un tiroir (3) sur le diamètre intérieur (1), ainsi que
- un dispositif (18) pour bloquer un tiroir (3) à l'encontre d'une rotation dans le plan perpendiculaire au diamètre intérieur (1).

2. Système de guidage selon la revendication 1, **caractérisé en ce que** le segment de manchon (15) comprend quatre surfaces d'appui (4).

3. Système de guidage selon l'une ou l'autre des revendications 1 et 2, **caractérisé en ce que** le segment de manchon (15) décrit un arc de cercle de 180° ou moins, de préférence de 120° ou de 90°.

4. Système de guidage selon l'une des revendications 1 à 3, **caractérisé en ce que** les segments de manchon (15) sont agencés dans des secteurs opposés du diamètre intérieur (1).

5. Système de guidage selon l'une des revendications 1 à 4, **caractérisé en ce que** le dispositif (17) pour maintenir un segment de manchon (15) sur le diamètre intérieur (1) comprend un aimant (5) qui est monté à l'extérieur du diamètre intérieur (1), le segment de manchon (15) et/ou les surfaces d'appui (4) étant réalisés d'un matériau magnétisable.

6. Système de guidage selon l'une des revendications 1 à 4, **caractérisé en ce que** le dispositif (17) pour maintenir un segment de manchon (15) d'un tiroir (3) sur le diamètre intérieur (1) présente un axe (13) qui est relié d'une part au tiroir (3) et qui reçoit d'autre part un aimant (5).

7. Système de guidage selon l'une des revendications 1 à 6, **caractérisé en ce que** le boîtier (2) présente une fente longitudinale (14) afin de permettre un mouvement axial d'un tiroir (3) conjointement avec un dispositif (17) destiné à maintenir le segment de manchon (15) de ce tiroir (3).

8. Système de guidage selon l'une des revendications 1 à 7, **caractérisé en ce que** la fente longitudinale (14) du boîtier (2) est refermée vers l'extérieur au moyen d'un ruban d'acier (6).

9. Système de guidage selon l'une des revendications 1 à 8, **caractérisé en ce que** le dispositif (18) destiné à bloquer un tiroir (3) à l'encontre d'une rotation présente un axe (13) qui est d'une part relié au tiroir (3) et qui reçoit d'autre part un palier à billes (7) qui est monté à l'extérieur du diamètre intérieur (1).

10. Système de guidage selon la revendication 9, **caractérisé en ce que** le boîtier (2) présente une fente longitudinale (14) pour permettre un mouvement axial d'un tiroir (3) conjointement avec un dispositif (18) destiné à bloquer le tiroir (3) à l'encontre d'une rotation.

11. Système de guidage selon l'une des revendications 1 à 10, **caractérisé en ce que** le dispositif (17) destiné à maintenir le segment de manchon (15) d'un tiroir (3) sur le diamètre intérieur (1) et le dispositif (18) pour bloquer un tiroir (3) à l'encontre d'une rotation sont combinés l'un avec l'autre.

12. Système de guidage selon l'une des revendications 1 à 11, **caractérisé en ce qu'**une came à broche (12) est utilisée à titre d'unité d'entraînement (12), qui entraîne le tiroir (3) via un couplage (11) sur celui-ci.

13. Système de guidage selon la revendication 12, **caractérisé en ce que**, vue en projection sur la section transversale du boîtier (2), la came à broche (12) est agencée latéralement à côté du tiroir (3).

14. Système de guidage selon l'une des revendications 1 à 13, **caractérisé en ce que** le boîtier (2) présente une forme cylindrique.

15. Système de guidage selon l'une des revendications 1 à 13, **caractérisé en ce que** le boîtier (2) comprend des rails qui s'étendent en direction axiale et qui sont agencés autour du diamètre intérieur (1).

16. Système de guidage selon l'une des revendications 1 à 14, **caractérisé en ce que** le boîtier (2) présente deux surfaces en forme de V agencées à l'opposé l'une de l'autre, qui entourent le diamètre intérieur (1).

17. Système de guidage selon l'une des revendications 1 à 16, **caractérisé en ce que** le boîtier (2) présente au moins une ouverture (10) en forme de segment.

18. Instrument optique, en particulier système de zoom, comportant un système de guidage selon l'une des revendications 1 à 17.
